# FASCICULE DE BREVET EUROPEEN

(11) **EP 3 760 514 B1**
(45) Date de publication et mention de la délivrance du brevet: **03.09.2025**
(21) Numéro de dépôt: 20183535.2
(22) Date de dépôt: 01.07.2020
(51) Int. Cl.: B61L 27/00, G06F 30/20

(54) **DISPOSITIF DE SIMULATION D'UN SYSTÈME FERROVIAIRE ET PROCÉDÉ DE SIMULATION ASSOCIÉ**
VORRICHTUNG ZUR SIMULATION EINES EISENBAHNSYSTEMS UND ENTSPRECHENDES SIMULATIONSVERFAHREN
DEVICE FOR SIMULATING A RAILWAY SYSTEM AND ASSOCIATED SIMULATION METHOD

(30) Priorité: 03.07.2019 FR 1907394
(43) Date de publication de la demande: 06.01.2021
(73) Titulaire: ALSTOM Holdings, 93400 Saint-Ouen-sur-Seine (FR)
(72) Inventeur: POISSON, Pascal, 92330 SCEAUX (FR); FRANCHI, Michele, 78750 MAREIL MARLY (FR); AUTHIE, Pierre, 78170 LA CELLE SAINT CLOUD (FR)
(74) Mandataire: Plasseraud IP

(56) Documents cités:
- KR-A- 20120 076 002
- YILIN HUANG ET AL: "Libros-II", 20101205; 1077952576 - 1077952576, 5 December 2010 (2010-12-05), pages 2150 - 2160, XP058028371, ISBN: 978-1-4244-9864-2
- MAO BAOHUA ET AL: "A computer-aided multi-train simulator for rail traffic", VEHICULAR ELECTRONICS AND SAFETY, 2007. ICVES. IEEE INTERNATIONAL CONFERENCE ON, IEEE, PISCATAWAY, NJ, USA, 13 December 2007 (2007-12-13), pages 1 - 5, XP031233365, ISBN: 978-1-4244-1265-5

## Description

La présente invention concerne un dispositif de simulation d'un système ferroviaire, dans le but notamment d'optimiser le fonctionnement de ce système et d'améliorer son efficacité énergétique.

Un système ferroviaire, en particulier un système ferroviaire de trains urbains, est un système complexe constitué de nombreux systèmes et sous-systèmes coopérant les uns avec les autres.

Au moyen des technologies de simulation connues, il n'est soit pas possible de prédire les effets sur l'ensemble du système ferroviaire d'un changement local, (par exemple affectant un sous-système), soit pas économiquement viable de développer et maintenir un logiciel adapté, soit encore pas envisageable d'obtenir, avec un temps de simulation acceptable, des informations pertinentes sur le comportement d'un tel système.

L'article de YILIN HUANG et al. " Libros - II", 20101205; 1077952576 - 1077952576, 5 décembre 2010 (2010-12-05), pages 2150-2160, XP058028371, ISBN: 978-1-4244-9864-2, l'article de MAO BAOHUA et al. "A computer-aided multi-train simulator for rail traffic", VEHICULAR ELECTRONICS AND SAFETY, 2007. ICVES. IEEE, INTERNATIONAL CONFERENCE ON, IEEE, PISCATAWAY, NJ, USA, 13 décembre 2007 (2007-12-13), pages 1-5, XP031233365, et la demande de brevet KR 2012 0076002 A présentent différentes techniques de simulation d'un système ferroviaire.

Le but de cette invention est de résoudre ce problème.

Pour cela, l'invention a pour objet un dispositif de simulation d'un système ferroviaire et un procédé de simulation selon les revendications annexées.

L'invention et ses avantages seront mieux compris à la lecture de la description détaillée qui va suivre d'un mode de réalisation particulier, donné uniquement à titre d'exemple illustratif et non limitatif, cette description étant faite en se référant aux dessins annexés sur lesquels :
La figure 1 est une représentation schématique, sous forme de blocs, d'une plateforme informatique en tant que dispositif de simulation propre à exécuter le procédé de simulation selon l'invention ; et,
La figure 2 est une représentation fonctionnelle d'une modélisation en composants unitaires du système ferroviaire complet à simuler, cette modélisation étant utilisée par le dispositif de simulation de la figure 1.

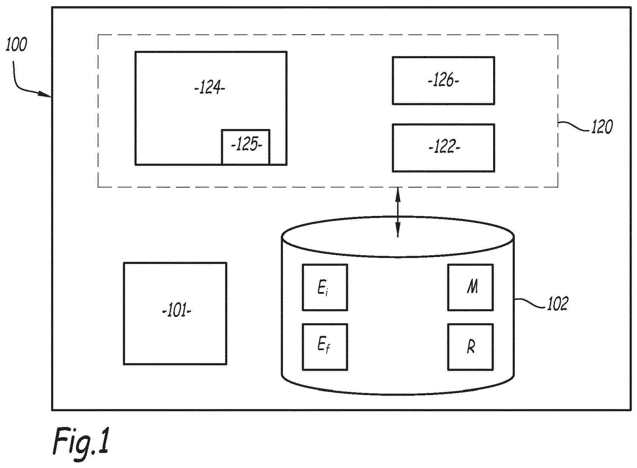

La figure 1 est une représentation schématique d'une plateforme informatique 100, également appelée par la suite dispositif de simulation.

Celle-ci comporte des moyens de calcul 101 et des moyens de mémorisation 102.

Les moyens de mémorisation stockent notamment des instructions de programmes d'ordinateur, qui sont propres à être exécutées par les moyens de calcul pour la mise en œuvre desdits programmes.

Parmi ces programmes, se trouve une application logicielle de simulation 120 dont l'exécution permet de mettre en œuvre le procédé de simulation selon l'invention du comportement d'un système ferroviaire complet.

Ce système ferroviaire est par exemple un réseau ferroviaire de trains urbains, constitué d'une pluralité de lignes et d'une pluralité de trains circulant sur ces lignes.

L'application logicielle de simulation 120 est fondée sur une modélisation M du système ferroviaire. Cette modélisation M est stockée dans les moyens de mémorisation 102.

La modélisation est fondée sur une décomposition du système ferroviaire en une pluralité de blocs fonctionnels également appelés agents élémentaires, un agent élémentaire correspondant à la plus petite entité fonctionnelle du système ferroviaire.

La modélisation M associe alors, à chaque bloc fonctionnel/agent élémentaire, un composant unitaire Ci.

Selon l'invention, chaque agent est décrit à travers un ensemble de comportements déterministes, un comportement étant déclenché par des entrées identifiées et produisant des sorties identifiées. Le composant unitaire Ci associé à un bloc fonctionnel/agent élémentaire intègre un modèle reflétant le comportement/fonctionnement déterministe du bloc/de l'agent correspondant, ce modèle comportant des paramètres d'entrée Ei et des paramètres de sortie Si. Les paramètres de sortie représentent par conséquent l'effet des paramètres d'entrée sur le fonctionnement/comportement du composant unitaire, c'est-à-dire du bloc/de l'agent correspondant.

Chaque modèle comprend par exemple une pluralité d'instructions logicielles de programmation propres lorsqu'elles sont exécutées par les moyens de calcul 101 à déterminer en fonction des paramètres d'entrée, les paramètres de sortie correspondant.

Les sorties de certains composants unitaires sont exposées à l'ensemble des composants unitaires. Certaines de ces sorties constituent des entrées d'autres composants unitaires de la modélisation du système ferroviaire dont le comportement est sensible aux grandeurs concernées.

De surcroit les composants unitaires peuvent posséder plusieurs lois de comportements représentatives des cycles de fonctionnement du système ferroviaire ou des lois d'évolution de l'environnement du système ferroviaire.

De manière connue en soi, le système ferroviaire comprend un réseau de voies ferrées, au moins un dispositif d'alimentation électrique, au moins un véhicule ferroviaire, au moins une unité de régulation du trafic, au moins un dispositif de signalisation et au moins un organe de contrôle du ou des véhicules ferroviaires.

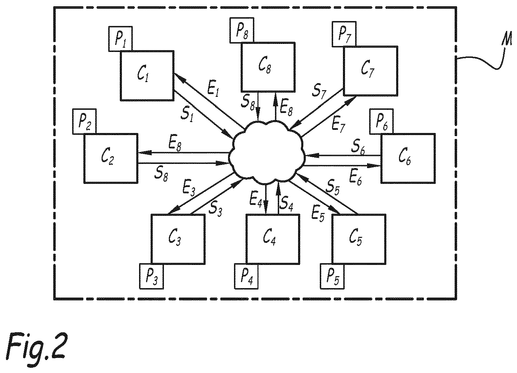

Comme représenté à la figure 2, la modélisation M du système ferroviaire complet comporte par exemple :
- un composant unitaire d'infrastructure C1 décrivant le réseau : la topologie de chaque ligne ; la position et état courant de chaque aiguille ; la pente locale ; la position de chaque station et des dépôts ; etc.
- un composant unitaire de modélisation du dispositif d'alimentation électrique C2 modélisant notamment : le type ("réversibles" ou non) de chaque sous-station d'alimentation ; la présence de moyens de stockage d'énergie ; les points d'injection et de retour du courant le long des voies ; les caractéristiques électriques des composants ; etc.
- un composant unitaire de véhicule ferroviaire C3 décrivant la configuration du véhicule ferroviaire : nombre de voitures ; masse ; systèmes auxiliaires (climatisation des voitures, éclairage, etc.) ; modèle de consommation/génération de puissance électrique à bord du train ; un modèle énergétique du système de traction ; un modèle de consommation énergétique des dispositifs auxiliaires à bord du train ; etc.
- un composant unitaire de cinématique de véhicule ferroviaire C4 dérivant le comportement dynamique du véhicule ferroviaire : accélération en traction et en freinage ; vitesse ; etc.
- un composant unitaire de régulation du trafic C5 décrivant : les mécanismes de régulation pour gérer le trafic des trains sur le réseau modélisé (le long des voies et au niveau des dépôts) ; les tables horaires ; etc.
- un composant unitaire de signalisation C6 décrivant : le dispositif de signalisation du réseau et sa dynamique de fonctionnement pour l'exploitation du réseau ; les limitations de vitesse ; les contraintes de protection des aiguilles ; etc.
- un composant unitaire de contrôle des trains C7 décrivant : les systèmes ATP/ATS mis en œuvre ; la génération d'autorisations de mouvement pour les trains ; etc.
- un composant unitaire d'environnement C8 décrivant des paramètres extérieurs affectant le système ferroviaire, c'est-à-dire des paramètres extérieurs relatif à un environnement dans lequel évolue le système ferroviaire : température de l'air extérieur ; température souhaitée à l'intérieur d'une voiture ; nombre de passagers ; etc.

Il est à souligner qu'un système peut à son tour être décomposé en sous-systèmes, et que par conséquent de nombreuses modélisations sont envisageables en fonction du niveau de décomposition d'un système du système ferroviaire et des modèles mis en œuvre par chaque composant élémentaire.

Le dispositif de simulation 100 comporte une unité d'édition 122 de la modélisation M, telle qu'une interface homme-machine, pour permettre à un opérateur de construire une telle représentation holistique de l'intégralité du réseau ferroviaire en incluant tous les systèmes et sous-systèmes interconnectés qui en font un système complexe.

L'application logicielle de simulation 120 comporte un moteur 124 de préférence du type holistique permettant de faire évoluer l'état du système ferroviaire représenté par la modélisation. Le moteur 124 est propre à être exécuté par les moyens de calcul 101.

Pour ce faire, la simulation est fondée sur des échelles de temps. Chaque composant unitaire Ci est associé à un cycle de vie, qui est défini par la donnée d'une période d'exécution.

La période d'exécution d'un composant unitaire et notamment du modèle qu'il intègre est un multiple d'une période minimale.

Lors de l'exécution du moteur 124 par les moyens de calcul 101, chaque composant unitaire et notamment le modèle qu'il intègre est exécuté périodiquement selon la valeur de la période d'exécution qui lui est associée.

Ainsi, les composants unitaires ayant une période d'exécution réduite sont exécutés plus souvent que les composants ayant une période d'exécution élevée. Les paramètres de sortie d'un composant unitaire ayant un cycle de vie court seront donc rafraichis plus souvent que ceux d'un composant unitaire ayant un cycle de vie long.

Ainsi par exemple, un cycle de vie de 100 ms est attribué au composant unitaire de cinématique de train, de 1 s au composant unitaire de matériel roulant décrivant notamment le comportement énergétique d'un train, et de 3600 s au composant unitaire d'environnement relatif aux équilibres thermiques.

Lors de son exécution, le moteur 124, qui est associé à un module d'importation 125, charge via ledit module la modélisation M ainsi qu'un fichier d'état initial Ei.

Le moteur 124 commence par initialiser l'état de la modélisation M. Les données d'initialisation sont lues dans le fichier d'état initial Ei.

Puis, au cours de l'exécution du moteur 124 par les moyens de calcul, le système ferroviaire simulé évolue, au rythme de son cycle de vie, chaque composant unitaire réagissant à l'évolution de ses paramètres d'entrée causée par le reste de la modélisation, extérieur au composant unitaire considéré. Dit autrement, le calcul des paramètres de sortie de chaque composant unitaire à un instant particulier est obtenu à partir d'un état connu à cet instant du système ferroviaire complet.

Au bout d'un certain temps d'exécution du moteur 124, équivalent à une durée d'exploitation du système ferroviaire, le moteur 124 produit un fichier d'état final Ef et un fichier de résultats R, correspondant à des grandeurs d'intérêt évaluées au cours de l'exécution de la simulation. Ces fichiers sont stockés dans les moyens de mémorisation 102 via le module 125.

En particulier, le fichier de résultats R comporte une estimation de la consommation énergétique du système ferroviaire et/ou des grandeurs relatives au fonctionnement du système ferroviaire.

La consommation énergétique est par exemple obtenue à partir d'un paramètre de sortie du composant unitaire du dispositif d'alimentation électrique.

L'application logicielle de simulation 120 comporte une unité d'interprétation 126 du fichier de résultats R propre à être exécutée par les moyens de calcul 101.

L'homme du métier constatera que l'invention consiste en une virtualisation du fonctionnement de l'ensemble d'un système ferroviaire à l'aide d'une technologie de simulation multi agents / multi échelles de temps, qui permet de déterminer un état du système à l'issue d'une durée d'exploitation avec un effort et un temps d'exécution abordables.

Avec une telle approche, il n'est notamment pas nécessaire de connaître l'effet d'un mode dégradé pour pouvoir le modéliser.

Lors de son exécution, le moteur 124, qui est associé à un module d'importation 125, charge via ledit module la modélisation M ainsi qu'un fichier d'état initial Ei.

Le moteur 124 commence par initialiser l'état de la modélisation M. Les données d'initialisation sont lues dans le fichier d'état initial Ei.

Puis, au cours de l'exécution du moteur 124 par les moyens de calcul, le système ferroviaire simulé évolue, au rythme de son cycle de vie, chaque composant unitaire réagissant à l'évolution de ses paramètres d'entrée causée par le reste de la modélisation, extérieur au composant unitaire considéré. Dit autrement, le calcul des paramètres de sortie de chaque composant unitaire à un instant particulier est obtenu à partir d'un état connu à cet instant du système ferroviaire complet.

Au bout d'un certain temps d'exécution du moteur 124, équivalent à une durée d'exploitation du système ferroviaire, le moteur 124 produit un fichier d'état final Ef et un fichier de résultats R, correspondant à des grandeurs d'intérêt évaluées au cours de l'exécution de la simulation. Ces fichiers sont stockés dans les moyens de mémorisation 102 via le module 125.

En particulier, le fichier de résultats R comporte une estimation de la consommation énergétique du système ferroviaire et/ou des grandeurs relatives au fonctionnement du système ferroviaire.

La consommation énergétique est par exemple obtenue à partir d'un paramètre de sortie du composant unitaire du dispositif d'alimentation électrique.

L'application logicielle de simulation 120 comporte une unité d'interprétation 126 du fichier de résultats R propre à être exécutée par les moyens de calcul 101.

L'homme du métier constatera que l'invention consiste en une virtualisation du fonctionnement de l'ensemble d'un système ferroviaire à l'aide d'une technologie de simulation multi agents / multi échelles de temps, qui permet de déterminer un état du système à l'issue d'une durée d'exploitation avec un effort et un temps d'exécution abordables.

Avec une telle approche, il n'est notamment pas nécessaire de connaître l'effet d'un mode dégradé pour pouvoir le modéliser.

## Revendications

1. Dispositif de simulation (100) d'un système ferroviaire, **caractérisé en ce que** le dispositif comporte :
- un organe de mémorisation (102) d'une modélisation (M) du système ferroviaire, ladite modélisation comprenant une pluralité de composants unitaires (C1 à C8) résultant d'une décomposition en blocs fonctionnels du système ferroviaire à simuler, chaque composant unitaire intégrant un modèle du comportement du bloc fonctionnel associé, ayant des paramètres d'entrée (E1 à E8) et délivrant des paramètres de sortie (S1 à S8), les paramètres de sorties d'au moins un composant unitaire étant propres à constituer des paramètres d'entrée d'un autre composant unitaire, chaque composant unitaire étant **caractérisé par** une période d'exécution du modèle du comportement qu'il intègre ; et,
- un organe de calcul (101), propre à simuler une évolution temporelle de la modélisation (M) du système ferroviaire à partir d'un état initial, en exécutant le modèle de comportement intégré dans chaque composant unitaire avec une périodicité correspondant à la période d'exécution qui le caractérise, en utilisant des valeurs courantes des paramètres d'entrée pour calculer des valeurs mises à jour des paramètres de sortie ;
dans lequel le système ferroviaire comprend un réseau de voies ferrées, au moins un dispositif d'alimentation électrique, au moins un véhicule ferroviaire, au moins une unité de régulation du trafic, au moins un dispositif de signalisation et au moins un organe de pilotage du ou des véhicules ferroviaires, la modélisation (M) comportant les composants unitaires suivants :
- un composant unitaire d'infrastructure modélisant le dispositif d'alimentation électrique et apte à déterminer à chaque période d'exécution des grandeurs électriques du réseau à partir notamment de valeurs de position et de puissance électrique appelée par chaque véhicule ferroviaire ; et
- un composant unitaire de véhicule ferroviaire modélisant la configuration du véhicule ferroviaire et/ou un composant unitaire de cinématique de véhicule ferroviaire modélisant le comportement dynamique du véhicule ferroviaire et/ou un composant unitaire de pilotage du ou des véhicules ferroviaires ; et
- un composant unitaire de signalisation apte à modéliser les dispositifs de sécurité du système ferroviaire relatifs à la circulation et à l'aiguillage de chaque véhicule ferroviaire ; et
- un composant unitaire de régulation du trafic apte à modéliser les algorithmes utilisés par des systèmes de supervision ferroviaire pour gérer des retards et le déplacement de chaque véhicule ferroviaire ; et avantageusement,
- un composant unitaire d'environnement décrivant des paramètres extérieurs affectant le système ferroviaire,
la période d'exécution associée à chaque composant unitaire étant un multiple d'une période minimale de référence.

2. Dispositif selon la revendication 1, dans lequel l'organe de calcul est propre à exécuter un module d'importation (125) propre à configurer l'état initial de la modélisation en chargeant un fichier d'état initial (Ei) depuis l'organe de mémorisation, l'état initial comprenant de préférence des valeurs des paramètres d'entrée pour chaque composant unitaire.

3. Dispositif selon l'une quelconque des revendications précédentes, dans lequel l'organe de calcul est configuré pour évaluer des grandeurs de fonctionnement du système ferroviaire simulé à partir des valeurs des paramètres de sortie.

4. Dispositif selon l'une quelconque des revendications précédentes, dans lequel l'organe de calcul est configuré pour évaluer une consommation énergétique du système ferroviaire simulé à partir des valeurs des paramètres de sortie.

5. Dispositif selon l'une quelconque des revendications précédentes, dans lequel le dispositif comporte une unité d'édition (122) permettant à un opérateur de définir la modélisation.

6. Dispositif selon l'une quelconque des revendications précédentes, dans lequel le dispositif comporte une unité d'interprétation (126) d'un fichier de résultats (R) généré par l'organe de calcul (101) à l'issue de la simulation.

7. Dispositif selon l'une quelconque des revendications précédentes, dans lequel l'organe de calcul est propre à exécuter un moteur du type holistique pour simuler l'évolution temporelle de la modélisation.

8. Procédé de simulation mis en œuvre par un dispositif de simulation conforme à l'une quelconque des revendications précédentes, **caractérisé en ce que** ledit procédé comporte les étapes consistant à :
- mémoriser une modélisation (M) du système ferroviaire, ladite modélisation associant un composant unitaire (C1 à C8) à chaque agent résultant d'une décomposition fonctionnelle du système ferroviaire à simuler, chaque composant unitaire intégrant un modèle du comportement de l'agent associé, ayant des paramètres d'entrée (E1 à E8) et délivrant des paramètres de sortie (S1 à S8), les paramètres de sorties d'au moins un composant unitaire étant propres à constituer des paramètres d'entrée d'un autre composant unitaire, chaque composant unitaire étant **caractérisé par** une période d'exécution (p1 à p8) du modèle du comportement qu'il intègre ; et,
- simuler une évolution temporelle de la modélisation (M) du système ferroviaire à partir d'un état initial, en exécutant le modèle de comportement de chaque composant unitaire avec une périodicité correspondant à la période d'exécution qui le caractérise, en utilisant des valeurs courantes des paramètres d'entrée pour calculer des valeurs mises à jour des paramètres de sortie,
la période d'exécution associée à chaque composant unitaire étant un multiple d'une période minimale de référence.

## Patentansprüche

1. Vorrichtung (100) zur Simulation eines Eisenbahnsystems, **dadurch gekennzeichnet, dass** die Vorrichtung umfasst:
- ein Speicherelement (102) für eine Modellierung (M) des Eisenbahnsystems, wobei die Modellierung eine Vielzahl von Einheitskomponenten (C1 bis C8) umfasst, die sich aus einer Zerlegung des zu simulierenden Eisenbahnsystems in Funktionsblöcke ergeben, wobei jede Einheitskomponente ein Modell des Verhaltens des zugehörigen Funktionsblocks enthält, das Eingangsparameter (E1 bis E8) aufweist und Ausgangsparameter (S1 bis S8) liefert, wobei die Ausgangsparameter wenigstens einer Einheitskomponente dazu geeignet sind, Eingangsparameter einer anderen Einheitskomponente zu bilden, wobei jede Einheitskomponente durch eine Ausführungsperiode des von ihr integrierten Verhaltensmodells gekennzeichnet ist; und
- eine Recheneinheit (101), die dazu geeignet ist, einen zeitlichen Verlauf der Modellierung (M) des Eisenbahnsystems ausgehend von einem Ausgangszustand zu simulieren, indem sie das in jeder Einheitskomponente integrierte Verhaltensmodell mit einer Periodizität ausführt, die der sie charakterisierenden Ausführungsperiode entspricht, wobei aktuelle Werte der Eingangsparameter zur Berechnung aktualisierter Werte der Ausgangsparameter verwendet werden;
wobei das Eisenbahnsystem ein Schienennetz, wenigstens eine Stromversorgungsvorrichtung, wenigstens ein Schienenfahrzeug, wenigstens eine Verkehrsregelungseinheit, wenigstens eine Signalisierungsvorrichtung und wenigstens eine Steuerungseinheit für das oder die Schienenfahrzeuge umfasst, wobei die Modellierung (M) die folgenden Einheitskomponenten umfasst:
- eine Infrastruktur-Einheitskomponente, die die Stromversorgungsvorrichtung modelliert und in der Lage ist, in jeder Ausführungsperiode elektrische Größen des Netzes insbesondere anhand von Positionswerten und der von jedem Schienenfahrzeug angeforderten elektrischen Leistung zu bestimmen; und
- eine Schienenfahrzeug-Einheitskomponente, die die Konfiguration des Schienenfahrzeugs modelliert, und/oder eine Schienenfahrzeug-Kinematik-Einheitskomponente, die das dynamische Verhalten des Schienenfahrzeugs modelliert, und/oder eine Steuerungseinheit für das oder die Schienenfahrzeuge; und
- eine Signalisierungs-Einheitskomponente, die die Sicherheitsvorrichtungen des Eisenbahnsystems in Bezug auf den Verkehr und die Weichenstellung jedes Schienenfahrzeugs modellieren kann; und
- eine Verkehrsregelungs-Einheitskomponente, die die von Eisenbahnüberwachungssystemen verwendeten Algorithmen zur Verwaltung von Verspätungen und der Bewegung jedes Schienenfahrzeugs modellieren kann; und vorteilhafterweise
- eine Einheitskomponente für die Umgebung, die externe Parameter beschreibt, die das Eisenbahnsystem beeinflussen,
wobei die mit jeder Einheitskomponente verbundene Ausführungsdauer ein Vielfaches einer minimalen Referenzdauer ist.

2. Vorrichtung nach Anspruch 1, wobei die Recheneinheit dazu geeignet ist, ein Importmodul (125) auszuführen, das dazu geeignet ist, den Anfangszustand der Modellierung durch Laden einer Anfangszustandsdatei (Ei) aus dem Speicherelement zu konfigurieren, wobei der Anfangszustand vorzugsweise Werte der Eingangsparameter für jede Einheitskomponente umfasst.

3. Vorrichtung nach einem der vorhergehenden Ansprüche, wobei die Recheneinheit dazu ausgebildet ist, Betriebsgrößen des simulierten Eisenbahnsystems anhand der Werte der Ausgangsparameter zu bewerten.

4. Vorrichtung nach einem der vorhergehenden Ansprüche, wobei die Recheneinheit dazu geeignet ist, einen Energieverbrauch des simulierten Eisenbahnsystems anhand der Werte der Ausgangsparameter zu bewerten.

5. Vorrichtung nach einem der vorhergehenden Ansprüche, wobei die Vorrichtung eine Ausgabeeinheit (122) umfasst, die es einem Bediener ermöglicht, die Modellierung zu definieren.

6. Vorrichtung nach einem der vorhergehenden Ansprüche, wobei die Vorrichtung eine Einheit zum Interpretieren (126) einer Ergebnisdatei (R) umfasst, die von der Recheneinheit (101) nach Abschluss der Simulation erzeugt wird.

7. Vorrichtung nach einem der vorhergehenden Ansprüche, wobei die Recheneinheit dazu geeignet ist, einen Antrieb vom holistische Typ zur Simulation des zeitlichen Verlaufs der Modellierung auszuführen.

8. Simulationsverfahren, das von einer Simulationsvorrichtung nach einem der vorhergehenden Ansprüche durchgeführt wird, **dadurch gekennzeichnet, dass** das Verfahren die folgenden Schritte umfasst:
- Speichern einer Modellierung (M) des Eisenbahnsystems, wobei die Modellierung jedem Agens, das sich aus einer funktionalen Zerlegung des zu simulierenden Eisenbahnsystems ergibt, eine Einheitskomponente (C1 bis C8) zuordnet, wobei jede Einheitskomponente ein Modell des Verhaltens des zugehörigen Agens enthält, das Eingangsparameter (E1 bis E8) aufweist und Ausgangsparameter (S1 bis S8) liefert, wobei die Ausgangsparameter wenigstens einer Einheitskomponente dazu geeignet sind, Eingangsparameter einer anderen Einheitskomponente zu bilden, wobei jede Einheitskomponente durch eine Ausführungsperiode (p1 bis p8) des von ihr integrierten Verhaltensmodells gekennzeichnet ist; und
- Simulieren einer zeitlichen Entwicklung der Modellierung (M) des Eisenbahnsystems ausgehend von einem Anfangszustand, indem das Verhaltensmodell jeder Einheitskomponente mit einer Periodizität ausgeführt wird, die der sie charakterisierenden Ausführungsperiode entspricht,
wobei aktuelle Werte der Eingangsparameter verwendet werden, um aktualisierte Werte der Ausgangsparameter zu berechnen,
wobei die jeder Einheitskomponente zugeordnete Ausführungsperiode ein Vielfaches einer minimalen Referenzperiode ist.

## Claims

1. Device (100) for simulating a railway system, **characterised in that** the device includes:
- a member (102) for storing a modelling (M) of the railway system, said modelling comprising a plurality of unitary components (C1 to C8) resulting from a breakdown into functional blocks of the railway system to be simulated, each unitary component integrating a model of the behaviour of the associated functional block, having input parameters (E1 to E8) and delivering output parameters (S1 to S8), the output parameters of at least one unitary component being capable of constituting input parameters of another unitary component, each unitary component being **characterised by** a period of execution of the behaviour model that it integrates; and,
- a calculation member (101), capable of simulating a change over time of the modelling (M) of the railway system from an initial state, by executing the behaviour model integrated in each unitary component with a periodicity corresponding to the execution period that characterises it, using current values of the input parameters to calculate updated values of the output parameters;
wherein the railway system comprises a network of railway tracks, at least one power supply device, at least one rail vehicle, at least one traffic regulation unit, at least one signalling device and at least one member controlling the rail vehicle(s), the modelling (M) including the following unitary components:
- a unitary infrastructure component modelling the electric power supply device and capable of determining at each execution period the electrical quantities of the network based in particular on position values and values of electric power demanded by each rail vehicle; and
- a rail vehicle unitary component modelling the configuration of the rail vehicle and/or a rail vehicle kinematic unitary component modelling the dynamic behaviour of the rail vehicle and/or a unitary component controlling the rail vehicle(s); and
- a unitary signalling component capable of modelling the safety devices of the railway system relating to the travel and switching of each rail vehicle; and
- a unitary traffic regulation component capable of modelling the algorithms used by railway supervision systems to manage delays and the movement of each railway vehicle; and advantageously,
- a unitary environment component describing external parameters affecting the railway system,
the execution period associated with each unitary component being a multiple of a minimum reference period.

2. Device according to claim 1, wherein the calculation member is capable of executing an import module (125) capable of configuring the initial state of the modelling by loading an initial state file (Ei) from the memory member, the initial state preferably comprising values of the input parameters for each unitary component.

3. Device according to any one of the preceding claims, wherein the calculation member is configured to evaluate operating quantities of the simulated railway system from the values of the output parameters.

4. Device according to any one of the preceding claims, wherein the calculation member is configured to evaluate an energy consumption of the simulated railway system from the values of the output parameters.

5. Device according to any one of the preceding claims, wherein the device includes an editing unit (122) allowing an operator to define the modelling.

6. Device according to any one of the preceding claims, wherein the device includes a unit (126) for interpreting a result file (R) generated by the calculation member (101) at the end of the simulation.

7. Device according to any one of the preceding claims, wherein the calculation member is capable of executing a holistic type engine to simulate the change over time of the modelling.

8. Simulation method implemented by a simulation device according to any one of the preceding claims, **characterised in that** said method comprises the steps of:
- storing a modelling (M) of the railway system, said modelling associating a unitary component (C1 to C8) with each agent resulting from a functional breakdown of the railway system to be simulated, each unitary component integrating a model of the behaviour of the associated agent, having input parameters (E1 to E8) and delivering output parameters (S1 to S8), the output parameters of at least one unitary component being capable of constituting input parameters of another unitary component, each unitary component being **characterised by** an execution period (p1 to p8) of the model of the behaviour it integrates; and,
- simulating a change over time of the modelling (M) of the railway system from an initial state, by executing the behaviour model of each unitary component with a periodicity corresponding to the execution period that characterises it, using current values of the input parameters to calculate updated values of the output parameters, the execution period associated with each unitary component being a multiple of a minimum reference period.
